# EUROPÄISCHE PATENTANMELDUNG

(11) **EP 1 817 996 A1**
(43) Veröffentlichungstag der Anmeldung: **15.08.2007**
(21) Anmeldenummer: 07002504.4
(22) Anmeldetag: 06.02.2007
(51) Int. Cl.: A47J 45/06

(54) **Schwenkbarer Stiel für eine Pfanne**

(30) Priorität: 10.02.2006 IT MI20060233
(71) Anmelder: BALLARINI PAOLO & FIGLI S.p.A., 46017 Rivarolo Mantovano (MN) (IT)
(72) Erfinder: Garziera, Roberto Vincenzo, 22070 Appiano Gentile (IT)
(74) Vertreter: Mayer, Hans Benno

(57) **Zusammenfassung**

Stiel für eine Pfanne, der mit einer Halterung (2) verbunden ist, wobei mit der Halterung (2) eine drehbare Verlängerung (7) verbunden ist, die um eine horizontale Achse (X) verdrehbar angeordnet ist und die Halterung (2) sowie die drehbare Verlängerung (7) auf beiden Seiten Nuten (3,6) aufweisen und mit diesen Nuten (3,6) Schwenkzapfen (20) in Wirkverbindung stehen, die sich gegenüberliegend angeordnet sind und längs einer Querachse des Stieles angeordnet sind, wobei der Stiel einen gegen die Wirkung einer Feder verschenkbaren Hebel (9) aufweist, der mit einem Arretierzahn (12) verbunden ist, und dieser mit einer Arretierstufe (13) der Verlängerung (7) in Wirkverbindung tritt.

## Beschreibung

Die vorstehende Erfindung betrifft einen schwenkbaren Stiel für eine Pfanne.

Es ist aus dem Stand der Technik bekannt geworden, Pfannen zu verwenden, die aus einem Behälter zum Kochen von Speisen bestehen.

Die bekannten Behälter weisen einen Stiel auf, der radial nach außen von der Wand des Pfannenbehälters absteht.

Die bekannte Ausführungsform der Pfanne hat den Nachteil, dass der Platzbedarf zum Verstauen der Pfanne die einen fest angeordneten Stiel aufweist, der radial vom Pfannenkörper absteht, erheblichen Platz sowohl für die Verpackung einer neuen Pfanne als auch für den Versand des Erzeugnisses, sowie für das Unterbringen der Pfanne in einer Geschirrspülmaschine in einem Kühlschrank oder in einem Küchenmöbel benötigt.

Es sind auch Pfannen bekannt geworden, die mit einem abnehmbaren Stiel ausgestattet sind.

Diese Möglichkeit erlaubt es, die Pfanne mit geringstem Platzbedarf einzulagern, sehr oft treten aber Schwierigkeiten bei der Verwendung der Pfanne auf, da der von der Pfanne abgenommene Stiel abhanden kommt oder nicht rasch in den Schubladen der Küchenmöbel aufgefunden wird.

Es ist aus dem Stand der Technik eine weitere Pfanne bekannt geworden, die einen Stiel aufweist, der aus seiner Gebrauchslage, in der er radial vom Pfannenkörper absteht, beim Einlagern der Pfanne über dem Raum der Pfanne, der zum Kochen der Speisen vorgesehen ist, angeordnet werden kann.

Diese bekannte Ausführungsform hat den Nachteil, dass der Stiel bei Nichtbenutzung der Pfanne nach oben vom Pfannenkörper absteht und den Raum belegt, der über dem Pfanneninneren gebildet ist und zum Kochen der Speisen dient. Dies führt dazu, dass bei Einlagern der Pfanne erneut die vorher beschriebenen Nachteile eintreten.

Aufgabe der vorstehenden Erfindung ist es, die genannten Nachteile des Standes der Technik zu vermeiden und eine Pfanne vorzuschlagen, die mit einem Griff ausgerüstet ist, der bei Verwendung der Pfanne radial von dieser absteht und somit ein einfaches und sicheres Ergreifen der Pfanne ermöglicht und bei Nichtbenutzung der Pfanne, die Möglichkeit besteht, den Stiel in eine umgelegte Lage zu bringen, wobei in dieser Lage der Stiel entlang des Pfannenumfanges zu liegen kommt, wodurch der Raumbedarf der Pfanne sowohl in Radialrichtung als auch in Achsialrichtung auf ein Minimum reduziert wird.

Diese Aufgabe wird durch einen verschwenkbaren Stiel für eine Pfanne dadurch gelöst, dass eine Halterung vorgesehen ist, die vom Körper der Pfanne absteht, und eine Verlängerung aufnimmt, dass die Halterung sowie die abstehende Verlängerung zu beiden Seiten Nuten aufweisen und die Nuten der vom Pfannenkörper abstehenden Verlängerung durch eine Wand abgedeckt sind, um eine Kammer zu bilden, die dazu geeignet ist, parallel zueinander angeordnete Arme, die von der Vorderseite des Stieles abstehen, aufzunehmen und dass ferner von den endseitig vorgesehenen Armen, sich gegenüberliegende Zapfen abstehen, die verschiebbar in den Nuten aufgenommen werden, die in der Halterung sowie in der Verlängerung angeordnet sind und die Verlängerung verdrehbar um eine Achse X mit der Halterung verbunden ist, und die Verlängerung eine Arretierstufe aufweist, die mit einem Arretierzahn verbindbar bzw. lösbar ist, und um einen Querstift verschwenkbar angeordnet ist, der im Stiel der Pfanne angeordnet ist.

Der Erfindungsgegenstand wird nun genauer beschrieben und in den beigefügten Zeichnungen anhand eines Ausführungsbeispieles dargestellt.

Es zeigen:
Figur 1 schematisch Teil einer Pfanne, die mit einer Aufnahme für die Montage eines Stieles ausgerüstet ist;
Figur 2 Teil des Pfannenkörpers gemäß Figur 1, mit einer endseitig vorgesehenen Lagerung für einen Stiel, unter Darstellung des teilweise ausgezogenen Stieles;
Figur 3 im Schnitt und im Detail Teil einer Pfanne, mit der entsprechenden Aufnahme- und Arretiervorrichtung für den Stiel;
Figur 4 im Querschnitt Teil der Pfanne mit der Vorrichtung gemäß Figur 3 in arretierter Stellung;
Figur 5 Teil der Pfanne mit dem teilweise ausgezogenen und teilweise verschwenkten Stiel;
Figur 6 in Ansicht Teil der Pfanne mit dem ausgezogenen Stiel;
Figur 7 in perspektivischer Darstellung den Stiel der Pfanne;
Figur 8 in perspektivischer Darstellung den verschwenkten Stiel der sich entlang der Umfangswand der Pfanne erstreckt und;
Figur 9 in Seitenansicht die Pfanne mit dem verschwenkten Stiel, der entlang der Pfannenwand zu liegen kommt.

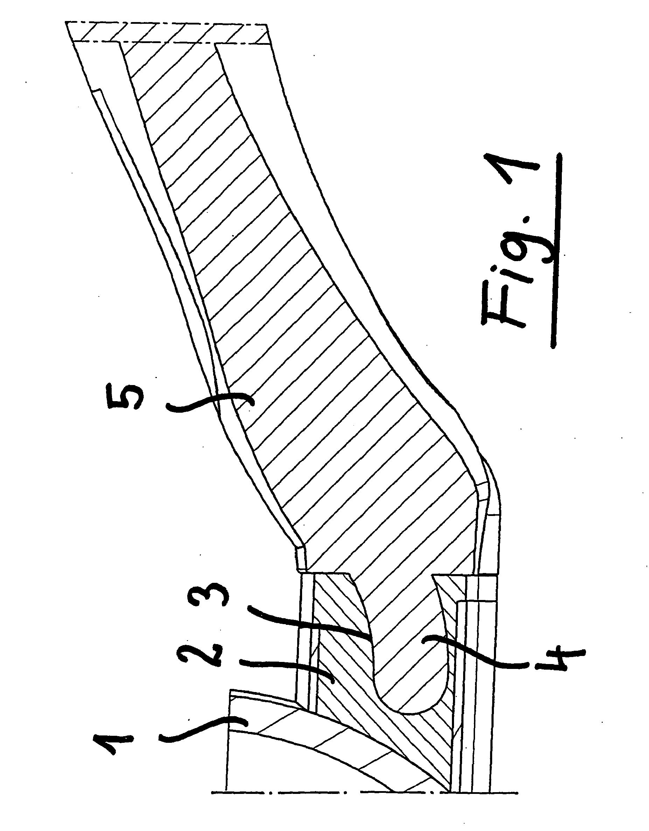

Der Figur 1 kann im Schnitt Teil einer Pfanne 1 entnommen werden, von der eine Verlängerung 2 absteht, die in parallel verlaufenden Öffnungen 3 Vorsprünge 4 aufnimmt, die vom Stiel 5 abstehen.

Dieses Detail wird im Anschluss noch genauer beschrieben werden.

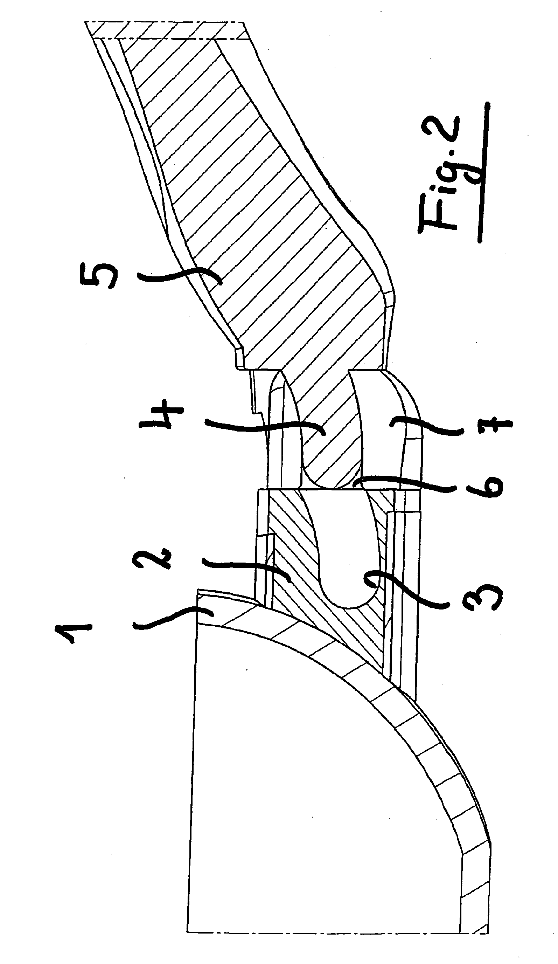

Der Figur 2 kann, stets in schematischer Darstellung, Teil der Pfanne 1 entnommen werden, mit einer abstehenden Verlängerung 2, einer Öffnung 3 sowie einem Vorsprung 4 oder einem abstehenden Arm des Stieles 5, der aus der Öffnung 3 ausgezogen wurde.

Jeder Vorsprung 4 wird weiterhin in einer Verlängung 6 der Öffnung 3 geführt.

Die Verlängerung 6 der Öffnung 3 ist in einen Lagerkörper 7 eingearbeitet, der gegenüber der Verlängerung 2 um eine horizontal angeordnete Achse X verschwenkt werden kann.

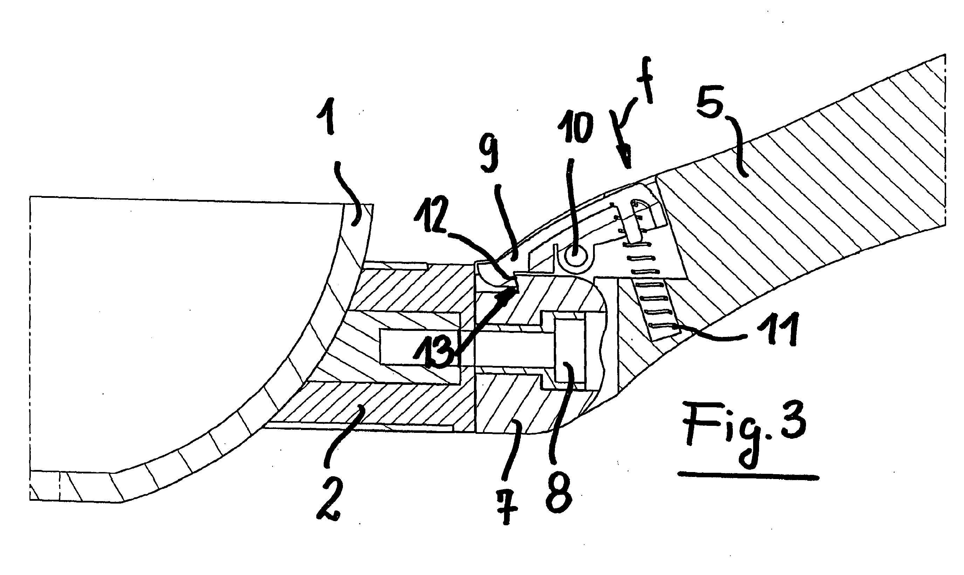

Der Figur 3 kann im Schnitt Teil der Pfanne 1 mit der Verlängerung 2, die vom Pfannenkörper absteht sowie der abstehende Lagerkörper 7, der mit der Halterung 2 unter Zuhilfenahme einer Schraube 8 verbunden ist, entnommen werden.

Der Figur 3 kann ferner im Schnitt der Stiel 5 entnommen werden, der an seiner Vorderseite einen Arretierhebel 9 aufnimmt, der um einen Querstift 10 verschwenkbar ausgebildet ist.

Der Hebel 9 liegt mit einem Ende auf einer Feder 11 auf, die in einer Ausnehmung des Stieles 5 angeordnet ist.

An der Vorderseite weist der verschwenkbare Hebel 9 einen Arretierzahn 12 auf, der mit einem Anschlag oder mit einer Arretierstufe 13 des Lagerkörpers 7 in Wirkverbindung tritt.

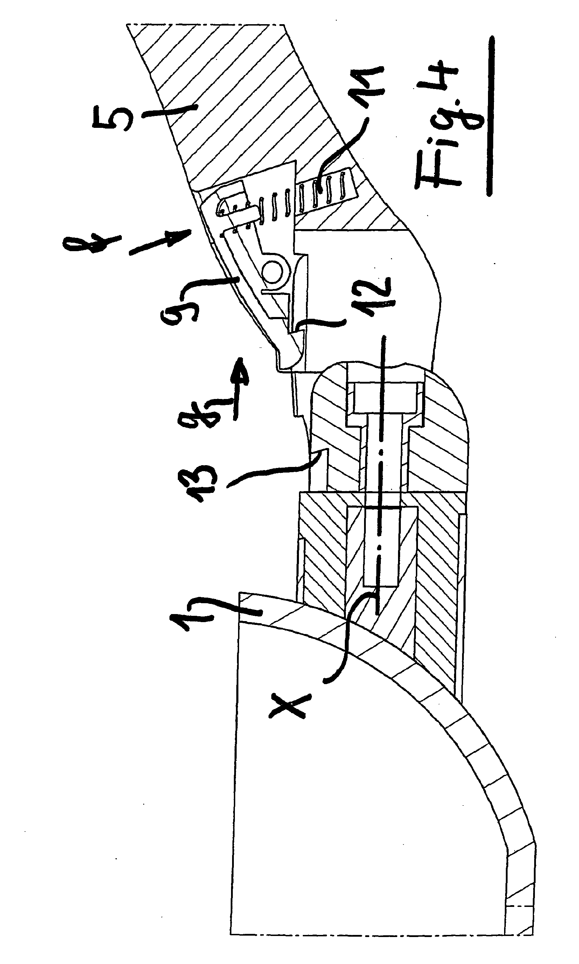

Durch Betätigen des Arretierhebels 9, wie durch den Pfeil (f) verdeutlicht, wird es möglich, die Feder 11 zu komprimieren und den Arretierzahn 12 des Stieles von der Arretierstufe 13 des Vorsprunges 7 zu lösen, um dadurch zu ermöglichen, dass der Stiel 5 nach außen abgezogen wird, wie dies durch den Pfeil (g) in Figur 4 dargestellt ist.

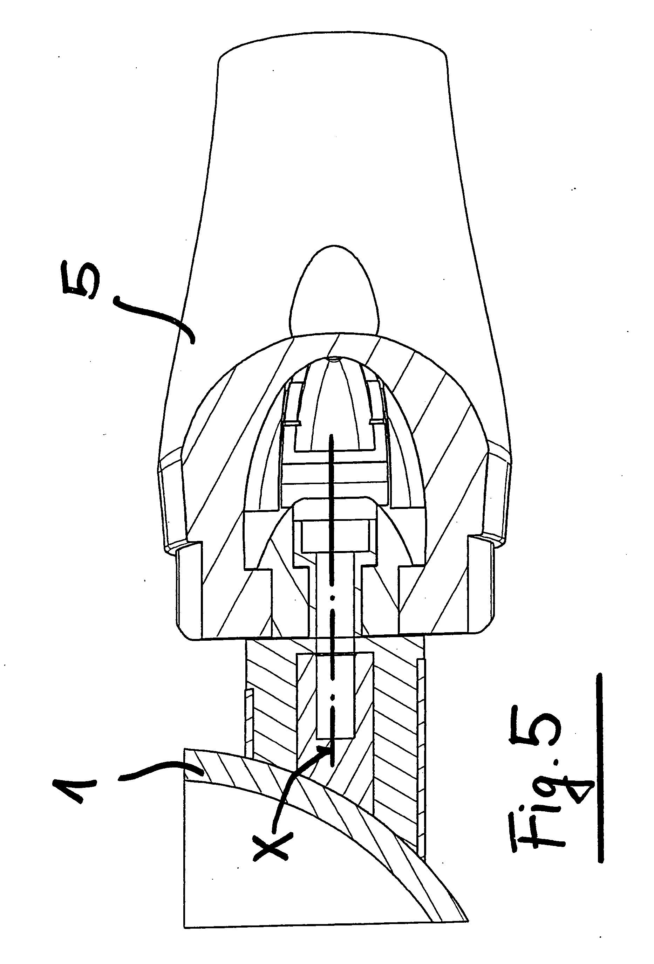

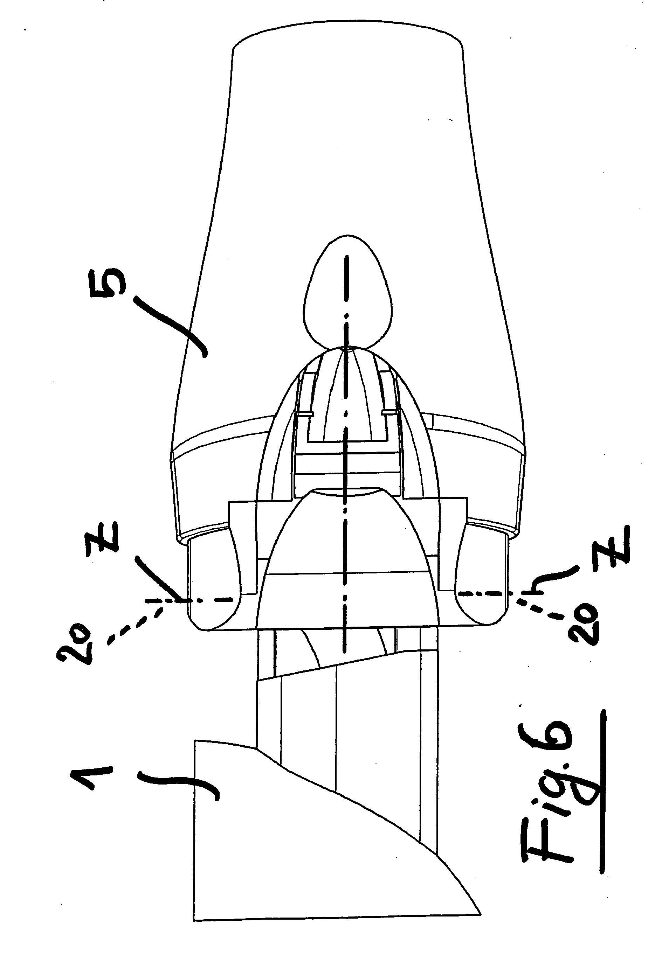

In dieser Stellung kann der Stiel 5 um die Achse X verschwenkt werden, um in eine Lage bewegt zu werden, die in den Figuren 5 und 6 dargestellt ist.

In Figur 5 ist der Stiel 5 um 90° um die Achse X verschwenkt worden, im Unterschied zu der Lage gemäß Figuren 1, 2, 3 und 4.

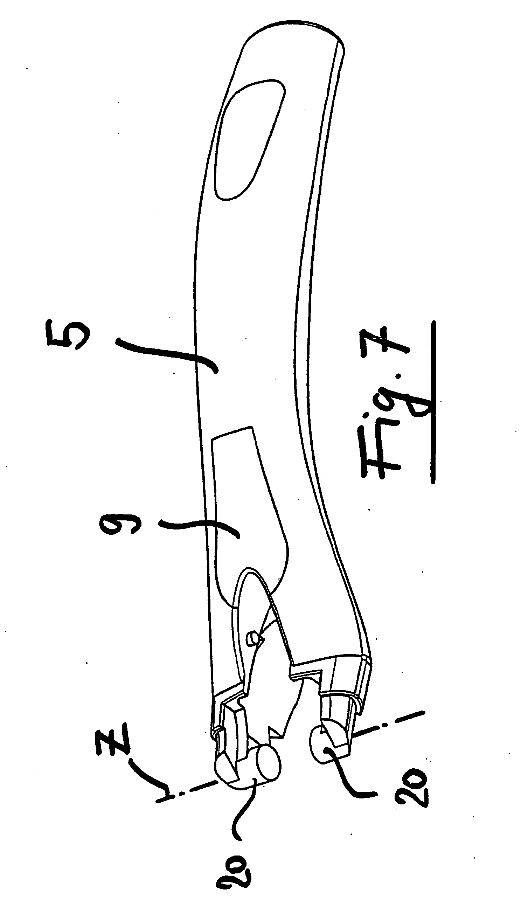

Wie im Detail in Figur 7 dargestellt ist, kann der Darstellung entnommen werden, dass der Stiel 5 in Übereinstimmung mit den Achsen Z Schwenkzapfen 20 aufweist.

Figur 7 zeigt in perspektivischer Darstellung den Stiel 5 mit dem Arretierhebel 9 sowie den Schwenkzapfen 20, die sich gegenüberliegen und entlang der Querachse Z angeordnet sind.

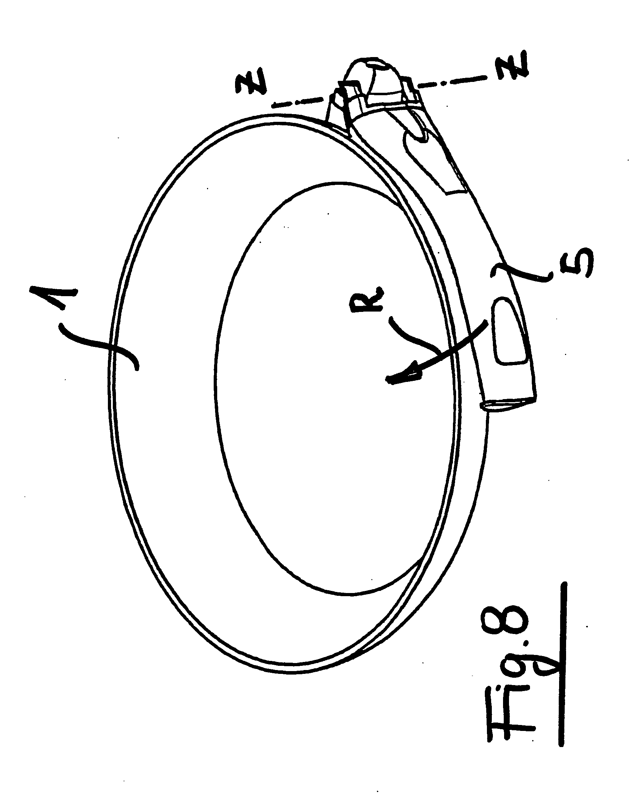

Die Schwenkzapfen sind entlang einer Querachse Z angeordnet. Nach Durchführung des Entriegelungsvorganges und der Drehbewegung um 90° (Figuren 5, 6) kann der Stiel um die Achse Z-Z verschwenkt werden, wie in Figur 8 durch den Pfeil R dargestellt ist.

Dadurch wird es möglich, den Stiel an der Umfangswand der Pfanne 1 anzulegen.

Nach Anliegen des Stieles in Ruhestellung an der Pfannenwand, weist die Pfanne 1 Minimalabmessungen in Radialrichtung auf, und der Stiel 5 steht nicht mehr in Radialrichtung von der Pfanne 1 ab.

In vorteilhafter Weise weist der Stiel 5 eine innenliegende Rundung auf, die ungefähr der Außenform der Pfanne 1 enspricht und somit kann der Stiel 5 einwandfrei an der Außenwand der Pfanne 1 anliegen.

Die Pfannenaußenwand könnte auch ovale Form oder ähnliche Form aufweisen.

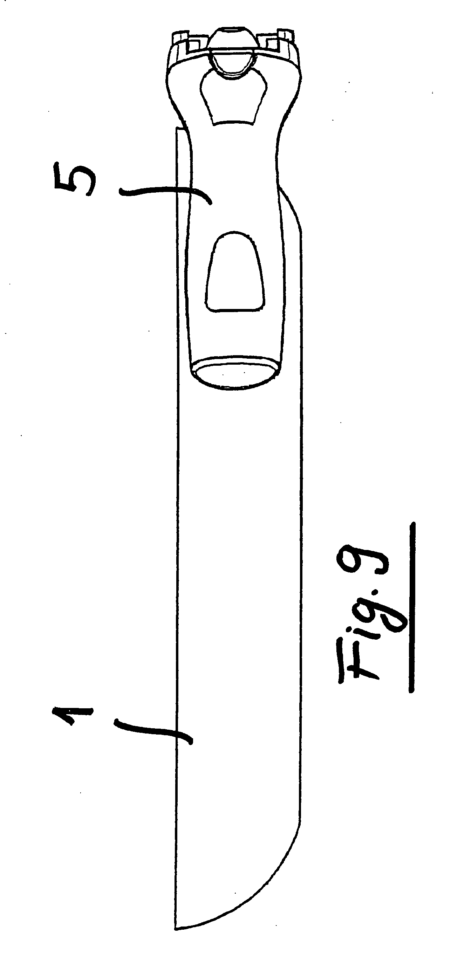

Der Figur 9 kann entnommen werden, dass der Stiel 5 nach Verschwenken in seine Ruhelage weder in Radialrichtung vom Körper der Pfanne 1 absteht noch in Achsialrichtung nach oben gegenüber dem Körper der Pfanne 1, in Ruhelage schmiegt sich der Stiel an den Umfangsverlauf der Pfanne 1 an.

## Patentansprüche

1. Verschwenkbarer Stiel für eine Pfanne, **dadurch gekennzeichnet, dass** eine Halterung (2) vorgesehen ist, die vom Körper der Pfanne (1) absteht und eine Verlängerung (7) aufnimmt, dass diese Halterung (2) sowie die abstehende Verlängerung (7) zu beiden Seiten Nuten (3, 6) aufweisen, und die Nuten der vom Pfannenkörper abstehenden Verlängerung (7) durch eine Wand abgedeckt sind, um eine Kammer zu bilden, die dazu geeignet ist, parallel zueinander angeordnete Arme, die von der Vorderseite des Stieles (5) abstehen, aufzunehmen und das von endseitig vorgesehenen Armen des Stieles (5) sich gegenüberliegende Zapfen (20) abstehen, die verschiebbar in den Nuten (3, 6) aufgenommen werden, die in der Halterung (2) sowie in der Verlängerung (7) angeordnet sind und die Verlängerung (7) verdrehbar um eine Achse (X) mit der Halterung (2) verbunden ist und die Verlängerung (7) eine Arretierstufe (13) aufweist, die mit einem Arretierzahn (12) verbindbar bzw. lösbar ist und um einen Querstift (10) verschwenkbar ist, der im Stiel (5) montiert ist.

2. Verschwenkbarer Stiel für eine Pfanne nach Patentansprüch 1, **dadurch gekennzeichnet, dass** die innenliegende Wölbung des Stieles (5) annähernd der Außenform der Pfanne entspricht.
